# EUROPÄISCHE PATENTSCHRIFT

(11) **EP 0 784 756 B1**
(45) Veröffentlichungstag und Bekanntmachung des Hinweises auf die Patenterteilung: **25.11.1998**
(21) Anmeldenummer: 95934122.3
(22) Anmeldetag: 29.09.1995
(51) Int. Cl.: F16C 23/04, F16C 29/02, F16C 3/035, F16F 9/36

(54) **FÜHRUNGSANORDNUNG FÜR HYDRAULIKZYLINDER**
GUIDE ARRANGEMENT FOR HYDRAULIC CYLINDERS
DISPOSITIF DE GUIDAGE POUR VERIN HYDRAULIQUE

(30) Priorität: 04.10.1994 DE 9415921 U
(43) Veröffentlichungstag der Anmeldung: 23.07.1997
(73) Patentinhaber: Firma Carl Freudenberg, 69469 Weinheim (DE)
(72) Erfinder: KAHLE, H., Otto, D-22417 Hamburg (DE)
(74) Vertreter: Moldenhauer, Herbert
(86) Internationale Anmeldenummer: EP9503874
(87) Internationale Veröffentlichungsnummer: WO9610700

(56) Entgegenhaltungen:
- DE-A- 3 216 427
- DE-A- 3 517 895
- FR-A- 1 259 363
- FR-A- 2 673 449
- US-A- 3 995 914
- US-A- 5 052 824
- PATENT ABSTRACTS OF JAPAN vol. 7 no. 183 (M-235) [1328] ,12.August 1983 & JP,A,58 084240 (TAIHOU KOGYO K.K.) in der Anmeldung erwähnt

## Beschreibung

Es ist bekannt (H.K.Müller: Abdichtung bewegter Maschinenteile, Waiblingen, 1990, S.190,191), in Hydraulikzylindern Führungsringe zur fluchtenden Ausrichtung der Stange vorzusehen. Einerseits müssen sie hinreichend zur Aufnahme der Führungskräfte bemessen sein. Andererseits dürfen sie die feinstbearbeitete Oberfläche der Stange nicht schädigen. Statt der früher verwendeten, metallischen Führungen zieht man daher Führungsringe aus Stoffen mit relativ geringerem Elastizitätsmodul vor, beispielsweise thermoplastische Werkstoffe, die bei Schiefstellung der Stange gegenüber dem Zylinder leichter nachgeben können. Ihre Festigkeit genügt aber den im Laufe der Zeit gestiegenen Beanspruchungen nicht mehr. Man verwendet daher in stärkerem Maße duroplastische Werkstoffe, wobei man aber wiederum die Erfahrung machen muß, daß Beschädigungen der Stangenoberfläche vorkommen oder die Führungsringe zerstört werden.

Der Erfindung liegt eine Analyse der Schäden zugrunde, aus der sich ergibt, daß die Schiefstellung der Stange gegenüber dem Zylinder zu einer wesentlich höheren Beanspruchung des Führungsrings führt, als bisher angenommen. Es ergibt sich nämlich bei einer solchen Schiefstellung eine Kantenpressung, die eine Spitzenbelastung zur Folge haben kann, die das Zehnfache der Nennbelastung weit übersteigt. Man kann die Kraftaufnahmefähigkeit der Führungsringe auch nicht einfach dadurch vergrößern, daß man sie in Axialrichtung verlängert oder mehrere Führungsringe hintereinander schaltet, weil sie bei Schiefstellung der Stange ohnehin nur auf einem Teil ihrer Länge tragen. Im Gegenteil kann das Problem der Kantenbelastung bei längeren Führungsringen im Vergleich zu kürzeren noch verstärkt werden, weil die Schrägstellung der Stange gegenüber dem Zylinder an den Führungsringkanten einen zusätzlichen radialen Platzbedarf der Stange verursacht, dessen Betrag nicht nur proportional dem Sinus der Stangenschrägstellung, sondern auch proportional der axialen Länge des Führungsrings ist. Wenn hier und im folgenden einfachheitshalber oft nur von dem im Zylinder eingebauten und mit der Oberfläche der Stange zusammenwirkenden Führungsring gesprochen wird, so soll damit mutatis mutandis auch der am Kolben vorgesehene und mit dem Zylinderrohr zusammenwirkende Führungsring gemeint sein.

Zur Entlastung eines Kolbens oder einer Stangenführung von den Kräften, die von einer Schiefstellung der Stange herrühren, ist es bekannt (Patent Abstracts Of Japan vol. 7 no. 183 (M-235) (1328) 12. August 1983 - JP-A-58 084 240) zwischen Stange und Kolben oder zwischen Zylinder und Stangenführung ein Pendelrollenlager einzuschalten. Statt dessen kann auch, wie in anderem Zusammenhang bekannt (FR-A 2 673 449) eine sphärische Beweglichkeit des Führungsrings vorgesehen sein. Jedoch ist die Fertigung sphärischer Flächen mit beträchtlichem Aufwand verbunden. Dies gilt umso mehr, als die sich gegenseitig stützenden, sphärischen Flächen identisch sphärisch ausgeführt sein müssen, da die zwischen ihnen stattfindende Pendelbewegung in der Regel unter hohen Kräften stattfindet und deshalb mangelnde Kongruenz zu hohem Verschleiß führen würde.

Der Erfindung liegt die Aufgabe zugrunde, eine Führungsringanordnung der im Gattungsbegriff des Anspruchs 1 genannten Art zu schaffen, die hohe Führungskräfte bei geringer Beanspruchung der gleitenden Oberfläche ermöglicht und nicht auf den hohen Fertigungsaufwand sphärischer Flächen angewiesen ist. Entsprechendes gilt bezüglich der Führung eines Kolbens gegenüber einem langgestreckten Zylinderrohr.

Die erfindungsgemäße Lösung besteht aus den Merkmalen des Anspruchs 1.

Ausgehend von der Beobachtung, daß die Kantenpressung des Führungsrings bei Schrägstellung der Stange extrem anwächst und dabei die tragende Fläche des Führungsrings sich gleichzeitig verringert, liegt die erfindungsgemäße Lösung in dem Gedanken, daß die jeweils durch die Führungskräfte der Stange belasteten Führungsringbereiche der Schrägstellung der Stange folgen können. Da der Ring in seiner Ebene dabei festgelegt bleibt und der Stange nicht in der Art eines Kugelgelenks folgen kann, wird er in sich verdreht. Diese Torsion bei gleichzeitiger Abstützung durch das Gehäuse wird dadurch ermöglicht, daß die Rückfläche des Führungsrings und die zugehörige Stützfläche des Gehäuses in ihrem axial mittleren Bereich im Verhältnis zueinander konvex vorspringen, während sie zu den Enden hin einen in der Weite zunehmenden Spalt einschließen. Sie sind im Verhältnis zueinander ballig geformt, wobei die Balligkeit entweder auf die Rückfläche des Führungsrings bei zylindrischer Stützfläche oder auf die Stützfläche bei zylindrischer Rückfläche des Führungsrings beschränkt sein kann oder auf beide Flächen verteilt sein kann. Die Balligkeit gestattet es dem Führungsring, bei Schrägstellung der Stange zu kippen und sich ihr dadurch unter entsprechender Verwindung abschnittsweise anzupassen. Dies ist nicht zu verwechseln mit der kongruent sphärischen Ausbildung der Rückfläche des Führungsrings mit der Stützfläche im Sinne einer Kugelverschwenkbarkeit des Führungsrings. Dieser ist vielmehr axial, beispielsweise durch Einbau in eine Aufnahmenut, festgehalten, so daß er nicht als Ganzes durch eine Schwenkbewegung der Stange folgen kann. Er behält seine Lage in einer zur Zylinderachse senkrechten Ebene bei. Die erfindungsgemäße Anpassung an die Schrägstellung der Stange ist daher nur dadurch möglich, daß er sich abschnittsweise unterschiedlich verformt und somit in bezug auf eine Umfangslinie tordiert wird.

Die Lösung scheint insofern paradox zu sein, als die Anlagefläche des Führungsrings an der Stützfläche der ihn aufnehmenden Nut durch diese Maßnahme verringert wird. Jedoch hat die Erfindung erkannt, daß trotzdem eine entscheidende Verbesserung der Beanspruchungsverhältnisse damit verbunden ist. Während bei feststehendem Führungsring die Beanspruchung sich auf die Kanten konzentriert, tritt sie im Falle der Erfindung hauptsächlich im mittleren Bereich des Führungsrings auf, und zwar in einer der Hertzschen Beanspruchung angenäherten Weise. Während die auf den Rand des Führungsrings konzentrierten Beanspruchungen dazu führen können, daß das Material dort plastisch fließt oder ausbricht, hält es einer sogar höheren Beanspruchung in weiter innenliegenden Bereichen leicht stand, weil das beanspruchte Material ringsum allseitig abgestützt ist.

Jede Ausführung der Rückfläche des Führungsrings bzw. der zugehörigen Stützfläche, bei der diese Flächen sich in ihrem axial mittleren Bereich aneinander abstützen, während sie zu den Enden hin Abstand voneinander gewinnen, eignet sich im Prinzip für die Realisierung der Erfindung. Bevorzugt wird jedoch eine im Meridionalschnitt monoton gekrümmte Wölbung einer oder beider dieser Flächen. Gute Ergebnisse wurden erzielt bei einer Wölbungskrümmung, die einem Kreisbogen folgt, das heißt die Wölbung ist sphärisch, wobei der Krümmungsradius gleich dem halben Durchmesser der Rückfläche des Führungsrings ist. Jedoch ist es meist zweckmäßiger, wenn die Krümmung einen größeren Radius aufweist. Sie folgt zweckmäßigerweise der Beziechung R=L/(2 sinα), wobei R der Krümmungsradius der Wölbungskrümmung, L die axiale Länge des Führungsrings und α der maximale Winkel der Achsabweichung ist. In der Regel ist der Radius der Wölbungskrümmung mindestens etwa doppelt so groß wie der Radius des Führungsrings wobei nach einem besonderen Merkmal der Erfindung der Radius der Wölbungskrümmung vom mittleren, maximal jeweils vorspringenden Bereich zu den Enden hin wächst. Dieses Merkmal hat die vorteilhafte Konsequenz, daß die Kraftübertragungsbedingungen mit zunehmender Verformung des Führungsrings aufgrund einer Schrägstellung der Stange günstiger werden.

Paradox ist die erfindungsgemäße Lösung nicht nur wegen der auf den ersten Blick ungünstig erscheinenden Kraftübertragungsbedingungen an der Rückseite des Führungsrings, sondern auch deshalb, weil aufgrund der zu erwartenden Durchbiegung der der Stange zugewendeten Führungsfläche des Führungsrings eine Verringerung des tragenden Teils dieser Führungsfläche zu erwarten ist. Zwar trifft diese Erwartung zu; sie hat aber nicht die befürchteten nachteiligen Folgen. Ähnlich wie bei der Kraftübertragung von der Rückfläche des Führungsrings auf die Stützfläche führt die Durchbiegung des Führungsrings in Verbindung mit seiner Schrägstellung dazu, daß die hauptbelastete Zone von den Führungsringkanten zu weiter zentral gelegenen Bereichen der Führungsfläche verlagert werden. Zum einen vermag das Führungsringmaterial dort höheren Beanspruchungen standzuhalten. Zum anderen verbessern sich damit die Schmierverhältnisse. Der vom Rand der Führungsfläche zur hauptsächlich belasteten Zone zunehmende Anlagedruck hat nämlich, ähnlich wie ein Keilspalt, eine Annäherung an hydrodynamische Schmierung zur Folge.

Die Führungsfläche des Führungsrings kann zylindrisch sein wie dies bei vorbekannten Führungsringen üblich ist. Nach einem besonderen Merkmal der Erfindung ist sie aber ein wenig konkav gemuldet. Dabei sind die Abmessung der Ausmuldung und der Verformungswiderstand des Führungsrings so aufeinander abgestimmt, daß in derjenigen Umfangszone des Führungsrings, die die seitliche Führungskraft hauptsächlich aufzunehmen hat, spätestens beim Auftreten der maximal zu erwartenden Führungskraft die Verformung des Rings so weit fortgeschritten ist, daß die Oberfläche des geführten Teils am Grunde der Ausmuldung anliegt. Dadurch wird zum einen eine bessere Kraftverteilung über die gesamte axiale Länge des Führungsrings in dem belasteten Abschnitt erreicht. Zum anderen ergibt sich dadurch eine Abstreifwirkung an den Endkanten des Führungsrings, wenn diese zweckmäßigerweise mit einem kleineren Durchmesser der Führungsfläche ausgeführt werden, als es dem Durchmesser der geführten Stange entspricht. In dem umgekehrten Fall, daß ein Führungsring an einem Kolben mit einer Zylinderbohrung zusammenwirkt, ist der Durchmesser der Führungsfläche an seinen axialen Enden entsprechend ein wenig größer als der Durchmesser der Zylinderbohrung. Partikeln, die möglicherweise abrasiv wirken, werden dadurch mit großer Wahrscheinlichkeit am Eintritt in den Führungsring gehindert. Hingegen schadet es nicht, wenn sie zwischen die Rückfläche des Führungsrings und die Stützfläche eintreten, weil sie dort bei der Rollbewegung des Rings ohne Schaden eingebettet werden. Ein weiterer Vorteil dieser Ausführung besteht darin, daß die durch die angegebene Bemessung erzielt Vorspannung des Führungsrings bei kleinen Führungskräften zu einer spielfreien Grundeinstellung und damit zu besonders kleinen Auslenkungen innerhalb des Federwegs der beiden Schenkel des Führungsrings (im Meridionalschnitt gesehen) führt. Die weiter oben erwähnte, hydrodynamische Schmierwirkung wird bei hohen Belastungen, bei denen sie besonders wichtig ist, durch die gemuldete Ausführung der Führungsfläche nicht aufgehoben.

Überraschenderweise braucht die Ausmuldung der Führungsfläche des Führungsrings in Verbindung mit der konvexen Ausbildung seiner Rückfläche nicht zu einer Einbuße an Führungsqualität bei größerer Belastung im Sinne eines Spiels zu führen. Vorteilhafterweise wird nämlich der größte Durchmesser der Führungsfläche in deren mittleren Bereich nicht wesentlich größer als das Maß ausgebildet, das sich dann ergibt, wenn der Durchmesser der Stange durch die Fertigungstoleranzen und den Wärmeausdehnungsbetrag vermehrt wird (umgkehrt bei Verwendung des Führungsrings an einem Kolben zur relativen Führung gegenüber einem Zylinderrohr). Bei Ausnutzung sämtlicher Fertigungstoleranzen und bei maximaler Wärmeausdehnung des Führungsrings ist das radiale Spiel Null. Die Verhältnisse sind also keineswegs ungünstiger als im Falle eines Führungsrings mit ausschließlich zylindrischen Führungs-Rück- und Stützflächen. Im Gegenteil muß bei den vorbekannten zylindrischen Führungsringen ein größerer Spiel vorgesehen werden, damit der Stange die unvermeidliche Schrägstellung erlaubt werden kann, ohne daß der Führungsring schon aufgrund dieser Schrägstellung zerstört wird.

Es ist oben dargelegt worden, daß die Verformung des Führungsrings unter einer Torsion, bezogen auf eine Umfangslinie, stattfindet. Um diese Verformung zu erleichtern, kann vorgesehen werden, daß über den Umfang verteilte Verformungsstellen verringerter Verformungsfestigkeit vorgesehen werden. Die Fähigkeit dieser Stellen zu leichterer Verformung bezieht sich vornehmlich auf die Torsion, da aufeinanderfolgende Ringabschnitte unterschiedliche Schrägstellung gegenüber der Zylinderachse einnehmen werden. Es können aber auch noch andere Verformungen beteiligt sein, beispielsweise Veränderungen des Abstands in Umfangsrichtung vornehmlich an den axialen Enden des Führungsrings.

Die verringerte Verformungsfestigkeit wird zweckmäßigerweise durch Reduktion der Querschnittsfläche im Meridionalschnitt herbeigeführt, wenn es sich um die Verbindung von einstückig ausgebildeten Ringabschnitten handelt. Diese Reduktion findet zweckmäßigerweise zur axialen Mitte des Führungsrings hin statt, da dort die Verformungen am geringsten sind. Es ist nicht erforderlich, daß die Verformungen elastisch stattfinden. Sie können auch plastisch sein. Sie können sogar zum Bruch führen, ohne daß dies die Funktion beeinträchtigt. Die Verformungsstellen können somit als Sollbruchstellen ausgeführt sein. Die nach dem Bruch nicht nicht mehr miteinander fest verbundenen Ringabschnitte werden in der vorgesehenen Stellung durch den Bauteil gehalten, in welchem sie montiert sind, beispielsweise durch die stirnseitigen Flanken einer Montagenut.

Der Führungsring braucht nicht einstückig ausgebildet zu sein; er kann vielmehr aus mehreren, nicht einstückigen Ringabschnitten zusammengesetzt werden. Der leichteren Montage halber werden diese Ringabschnitte aber zweckmäßigerweise so miteinander gekuppelt, daß sie als Einheit behandelt werden könne. Beispielsweise können sie durch Zapfen und Bohrung miteinander zum fertigen Führungsring gekuppelt sein.

Es ist auch nicht erforderlich, daß der Führungsring im Umfang geschlossen ist. Vielmehr kann er von einem Bandabschnitt gebildet sein, wie dies an sich bekannt ist. Etwaige Teilungen sollten radial und parallel zur Achse erfolgen, damit nicht Umfangsspannungen zu einer Verschiebung von schräg aneinander grenzenden Bandenden führen.

Für die Ausführung des erfindungsgemäßen Führungsrings kommen alle Werkstoffe in Frage, die hinreichende Gleit-, Lager- und Festigkeitseigenschaften aufweisen. Vorzugsweise werden Kunststoffe verwendet. Die Auswahl thermoplastischer oder duroplastischer Werkstoffe richtet sich nach dem jeweiligen Anwendungsfall. Auch Lagermetalle sollen nicht ausgeschlossen sein.

Da die spezielle Beanspruchung der erfindungsgemäßen Führungsringe zu hohen Schubspannungen sowie zu beträchtlichen Zugspannungen in Axial- und Umfangsrichtung führen können, kann es zweckmäßig sein, Füllstoffe, Einlagen oder Kompositelemente zu verwenden, die die Beständigkeit gegenüber diesen Beanspruchungen erhöhen. Beispielsweise kann die Schubfestigkeit eines Kunststoffs durch Füllstoffe erhöht werden. Die Zugfestigkeit kann durch Einlage einer Axial- und/oder Umfangsbewehrung vergrößert werden. Schließlich kann es zweckmäßig sein, die Biegefestigkeit bezüglich einer in Umfangsrichtung verlaufenden Momentenachse zu vergrößern, beispielsweise durch Auflage eines biegefesten Metallelements auf der Rückseite.

Die Erfindung wird im folgenden näher unter Bezugnahme auf die Zeichnung erläutert, die vorteilhafte Ausführungsbeispiele veranschaulicht. Es zeigen:
- Fig.1 u.2: einen Hydraulikzylinder mit unterschiedlich weit ausgezogener Stange,
- Fig.3: einen schematischen Teilschnitt durch einen Führungsring mit dem darin befindlichen Stangenabschnitt,
- Fig.4: einen Führungsringquerschnitt in vergrößertem Maßstab und
- Fig.5: eine abgewandelte Ausführungsform des Führungsringquerschnitts.

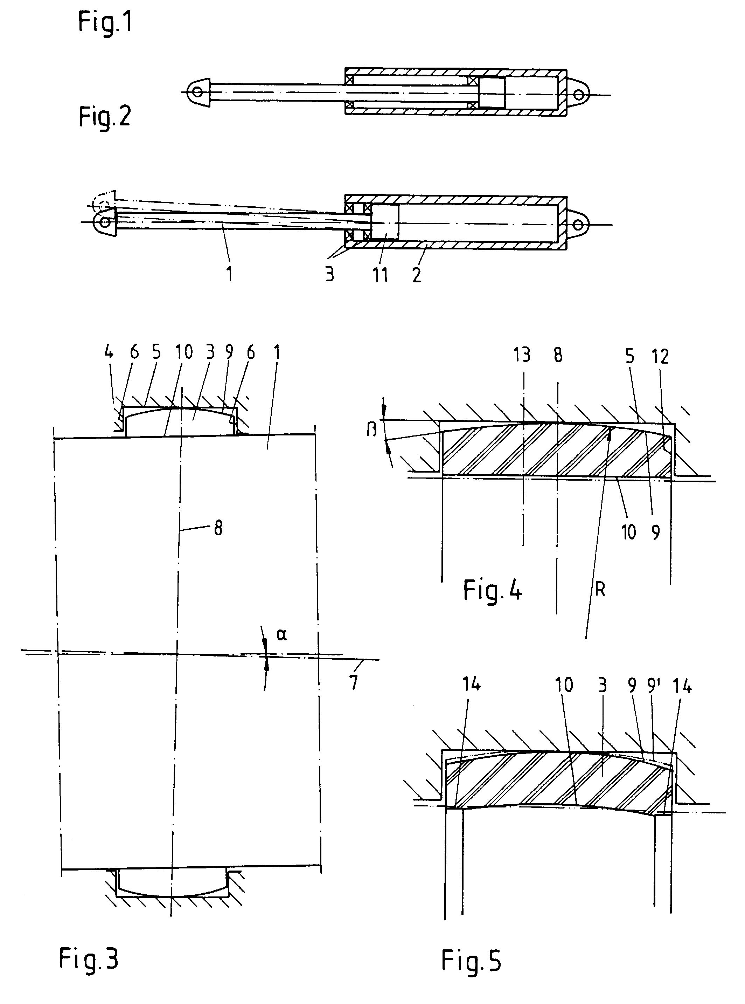

Wirken auf die Stangen von hydraulischen Geräten größere Querkräfte, so ergibt sich zwischen Stange 1 und Zylinder 2 ein Drehmoment, das von den zusammenwirkenden Führungsflächen dieser Elemente übertragen werden muß. Dazu dienen Führungsringe 3, die an dem Kolben und der Zylinderöffnung vorgesehen sind, um jeweils mit der empfindlichen, feinstbearbeiteten Oberfläche der Stange bzw. der Zylinderbohrung schonend zusammenzuwirken. Wenn - wie in Fig.2 strichpunktiert dargestellt - die Stange sich gegenüber dem Zylinder schräg stellt, konzentriert sich die Beanspruchung bei den bekannten, im Meridionalschnitt rechteckigen Führungsringen an deren Kanten, was zur Schädigung der Führungsringe und schließlich auch der damit zusammenwirkenden Gleitfläche führen kann.

Der erfindungsgemäße Führungsring kann demgegenüber der Schrägstellung der Stange nachgeben, wie in Fig.3 demonstriert ist.

Der Führungsring 3 ist im Zylindergehäuse 4 in einer Nut gelagert, deren Grund 5 eine Stützfläche für den Führungsring bildet. Durch die Stirnflächen 6 der Nut ist er in axialer Richtung mit geringem Spiel gehalten, so daß er auch bei Schrägstellung der Stange auf die lotrecht zur Zylinderachse 7 stehende Ebene 8 ausgerichtet bleibt. Wenn die Stange 1 in der Zeichnungsebene um den Winkel Alpha gegenüber dem Zylinder schräg gestellt wird, können jedoch die die Stange abstützenden Ringquerschnitte dieser Schrägstellung des Rings folgen, weil die Rückfläche 9 des Führungsrings 3 von der Stützfläche 5 nicht festgehalten wird. Da der Ring in der lotrecht zur Achse 7 stehenden Ebene festgehalten wird, erleidet er dabei eine Torsion.

Im belasteten Ringabschnitt liegt die gesamte Führungsfläche 10 an der Oberfläche der Stange 1 an. Das bedeutet nicht, daß sämtliche Teile dieser Fläche in gleichem Maße an der Übertragung der Führungskraft beteiligt sind. Vielmehr wird die Pressung in demjenigen Bereich der Führungsfläche, der dem an der Stützfläche 5 anliegenden Teil 9 gegenüber liegt, höher belastet sein, während die benachbarten Bereiche der Führungsfläche 10 infolge von Durchbiegung des Führungsrings 3 eine geringere Belastung aufzunehmen haben. Gleichwohl findet eine bessere Beanspruchungsverteilung in der Führungsfläche 10 statt als bei den vorbekannten Führungsringen. Außerdem ist diese Beanspruchung ihrer Art nach günstiger, weil sie der Hertzschen Beanspruchung angenähert ist. Zwar ist die Radialausdehnung des Rings zu gering, als daß die Hertzschen Gleichungen vorbehaltlos angewendet werden könnten; aber die beanspruchten Flächenbereiche sind ringsum von Ringmaterial abgestützt, so daß die zulässige Belastung wesentlich höher ist als bei der Kantenbelastung der vorbekannten Ringe.

Ähnlich ist die Beanspruchung des Führungsrings an der Rückseite zu beurteilen. Zwar führt die Krümmung der Rückfläche zu einer Beanspruchungskonzentration; aber auch hier wirkt sich günstig aus, daß die Beanspruchung der Hertzschen ähnliche ist, so daß die spezifische Belastbarkeit des Materials wesentlich höher ist als bei der bekannten Beanspruchung der vorbekannten Ringe.

Im Hinblick auf eine günstige Kraftübertragung von der Rückfläche des Führungsrings auf die Stützfläche ist ein möglichst großer Krümmungsradius der Rückfläche in der Meridionalebene erwünscht. Er ist mindestens so groß, daß die Tangente an die Rückflächenoberfläche im weitest außen liegenden Bereich des Führungsrings (Fig.4) mit der Richtung der Stützfläche 5 einen Winkel beta einschließt, der nicht kleiner ist als der Schrägstellungswinkel alpha der Stange. Dabei sollte aber dafür Sorge dafür getragen sein, daß bei derjenigen Schrägstellung der Stange und des Führungsrings, bei der die maximale Beanspruchung durch die Führungskraft stattfindet, der Kern des Beanspruchungsbereichs des Führungsrings noch hinreichenden Abstand von dessen Kante aufweist. Demnach soll derjenige Bereich der Rückfläche 9, in welchem der Tangentenwinkel beta gleich dem maximalen Schrägstellungswinkel alpha der Stange ist, einen hinreichenden Abstand von der Stirnfläche des Führungsrings aufweisen.

Da im allgemeinen die Führungskraft mit zunehmender Schrägstellung zunimmt, kann es zweckmäßig sein, den Krümmungsradius der Rückfläche von der Mitte zu den Stirnflächen hin allmählich zunehmen zu lassen, um dadurch günstigere Hertzsche Beanspruchungsbedingungen in dem Bereich der höheren Beanspruchung außerhalb des zentralen Bereichs zu schaffen.

In den Zeichnungen ist angenommen, daß die Querschnittsform des Führungsrings bezüglich seiner Mittelebene 8 symmetrisch ist. Dies ist nicht erforderlich. Es kann im Gegenteil zweckmäßig sein, den am meisten vorspringenden Bereich der Rückfläche 9 bzw. der Stützfläche 5 außermittig näher bei derjenigen Stirnfläche des Führungsrings anzuordnen, die im Hinblick auf die Gesamtanordnung des Hydraulikzylinders nach innen weist. Bei demjenigen Führungsring, der an der Öffnung eines Zylinders vorgesehen ist, ist dies die Stirnseite des Führungsrings, die dem Kolben der Stange zugewendet ist. Bei dem an einem Kolben angeordneten, mit der Zylinderbohrung zusammenwirkenden Führungsring ist dies die Stirnfläche, die zur Zylinderöffnung hin orientiert ist. Dies beruht auf der Überlegung, daß eine Schrägstellung des Führungsrings auf der belasteten Seite immer nur in einer Richtung stattfindet, wobei die Hauptbelastungszone des Führungsrings im Hinblick auf die Gesamtanordnung nach außen wandert. Wenn man sich also beispielsweise vorstellen würde, daß Fig.4 einen im Zylinder eingebauten Führungsring veranschaulicht, dessen in der Zeichnung rechts erscheinende Stirnseite 12 nach außen weist, so ist es denkbar, den Ring auf der Innenseite bei der strichpunktierten Ebene 13 enden zu lassen, also in geringem Abstand von der Mittelebene 8 zur Innenseite hin.

Die Höhe der vom Führungsring aufzunehmenden, radialen Führungskräfte hängt vom Schrägstellungswinkel der Stange gegenüber dem Zylinder ab. Da Spiel im Führungsring die Schrägstellungsneigung erhöht, muß es möglichst gering gehalten werden. Es sollte nicht größer sein als die Summe der radialen Herstellungstoleranzen der drei Elemente Gehäuse, Stange und Führungsring. Dieses Spiel ist in Fig.4 zwischen der Führungsfläche 10 und der strichpunktiert angedeuteten Oberfläche der Stange angedeutet.

Gemäß Fig.5 läßt sich dieses Spiel - mindestens für kleine Führungskräfte - dadurch ausschalten, daß die Führungsfläche 10 schwach ausgemuldet wird, so daß sie in den Randbereichen 14 selbst bei Summierung der größten Herstellungstoleranzen die wieder gestrichelt angegebene Oberfläche der Stange mindestens erreicht, vorzugsweise aber überschreitet. Der letztere Fall ist in Fig.5 dargestellt, wo man erkennt, daß die Randbereiche 14 des Führungsrings 3 im entspannten Zustand über die gestrichelt angedeutete Oberflächenlinie der Stange radial nach innen hinausgehen. Das bedeutet, daß bei der Montage der Führungsring sich elastisch verformen muß. Die Randbereiche 14 liegen dann auf der Oberfläche der Stange auf, während die Rückfläche 9 sich im Sinne der gestrichelten Linie 9' verformt.

Solange die vom Führungsring auf die Stange übertragene, radiale Führungskraft nicht größer ist als die elastische Vorspannkraft des Führungsrings, ist die Anordnung völlig spielfrei. Bei größeren Kräften werden die Randbereiche 14 des Führungsrings allmählich nach radial außen zurückweichen, wobei je nach Formgebung der Führungsfläche 10 ein zunehmender Anteil derselben mit der Stangenoberfläche in Berührung kommen kann. Dabei wandert die Berührungsfläche zunehmend zur Mitte des Führungsrings hin, wodurch dessen elastisches Verhalten zunehmend steifer wird, bis schließlich vollständige Anlage der Stangenoberfläche an der Führungsfläche 10 auch in deren ursprünglich am weitesten von der Stange entfernten Bereich stattfindet. Die Lage dieses Bereichs bestimmt also das maximale Spiel. Die Bedingung, daß das Spiel nicht wesentlich größer sein soll als die Summe der beteiligten Herstellungstoleranzen und Wärmedehnungsbeträge, wird daher bei dieser Ausführungsform auf den Bereich der Führungsfläche angewendet, der ursprünglich den größten radialen Abstand von der Stangenoberfläche aufweist.

Es wurde bei der Beispielsbeschreibung zwar hauptsächlich auf denjenigen Führungsring Bezug genommen, der im Zylinder eingebaut ist und mit der Stangenoberfläche gleitend zusammenwirkt; es versteht sich aber, daß diese Erläuterungen entsprechend ebenso für denjenigen Führungsring gelten, der am Kolben bzw. am Plungerende eingebaut ist. Seine zylindrische Führungsfläche wirkt mit der Bohrungsoberfläche des Zylinders zusammen, während die konvex gekrümmte Rückfläche auf dem Grund der den Ring aufnehmenden Nut sich abstützt.

## Patentansprüche

1. Führungsringanordnung an einem zylindrischen Führungsteil (2, 11) zum relativen Führen eines langgestreckten geführten Teils (1, 2) mit einem Führungsring (3), der eine im wesentlichen zylindrische Führungsfläche (10) zum gleitenden Zusammenwirken mit der zylindrischen Oberfläche des geführten Teils (1,2) und eine Rückfläche (9) aufweist, und mit einer Halteeinrichtung (5,6) für den Führungsring (3) an dem Führungsteil (2,11), die eine mit der Rückfläche (9) des Führungsrings (3) zusammenwirkende, Stützfläche (5) umfaßt, dadurch gekennzeichnet, daß die Stützfläche (5) und die Rückfläche (9) im Verhältnis zueinander konvex vorspringen und seitlich von dem vorspringenden Bereich einen Spalt mit nach außen hin zunehmender Weite einschließen, daß die Halteeinrichtung (5,6) den Führungsring (3) auch dann in einer lotrecht zur Achse des Führungsteils verlaufenden Ebene (8) hält, wenn ein Achsabweichungswinkel (α) zwischen dem Führungsteil und dem geführten Teil auftritt, und daß der Führungsring (3) bei Vorhandensein eines solchen Achsabweichungswinkels (α) tordiert ist.

2. Führungsringanordnung nach Anspruch 1, dadurch gekennzeichnet, daß die Stützfläche (5) zylindrisch und die Rückfläche (9) konvex ist.

3. Führungsringanordnung nach Anspruch 1, dadurch gekennzeichnet, daß die Rückfläche (9) zylindrisch und die Stützfläche (5) konvex ist.

4. Führungsringanordnung nach Anspruch 1, dadurch gekennzeichnet, daß die Rückfläche und die Stützfläche konvex sind.

5. Führungsringanordnung nach einem der Ansprüche 1 bis 4, dadurch gekennzeichnet, daß der konvexe Vorsprung als im Längsschnitt monoton gekrümmte Wölbung ausgebildet ist.

6. Führungsringanordnung nach Anspruch 5, dadurch gekennzeichnet, daß die Wölbungskrümmung ein Kreisbogen ist.

7. Führungsringanordnung nach Anspruch 6, dadurch gekennzeichnet, daß der Radius der Wölbungskrümmung größer als der halbe Durchmesser des Führungsrings ist.

8. Führungsringanordnung nach einem der Ansprüche 1 bis 6, dadurch gekennzeichet, daß der Radius der Wölbungskrümmung etwa der Formel entspricht: R=L/(2 sinα), wobei bedeuten:
R: Radius der Wölbungskrümmung
L: axiale Länge des Führungsrings
α: Achsabweichungswinkel.

9. Führungsringanordnung nach einem der Ansprüche 1 bis 8, dadurch gekennzeichnet, daß der Radius der Wölbungskrümmung mindestens etwa dem doppelten Radius des Führungsrings gleicht.

10. Führungsringanordnung nach Anspruch 5, dadurch gekennzeichnet, daß der Radius der Wölbungskrümmung vom maximal vorspringenden Bereich zu den Enden hin wächst.

11. Führungsringanordnung nach einem der Ansprüche 1 bis 10, dadurch gekennzeichnet, daß die Führungsfläche (10) zylindrisch ist.

12. Führungsringanordnung nach einem der Ansprüche 1 bis 10, dadurch gekennzeichnet, daß die Führungsfläche (10) konkav gemuldet ist.

13. Führungsringanordnung nach Anspruch 12, dadurch gekennzeichnet, daß die Muldungsabmessungen und der Verformungswiderstand des Führungsrings (3) so bemessen sind, daß der Grund der Ausmuldung spätestens bei der maximal zu erwartenden Führungskraft an der Oberfläche des geführten Teils anliegt.

14. Führungsringanordnung nach Anspruch 13, dadurch gekennzeichnet, daß der kleinste (größte) Durchmesser der Führungsfläche (10) an deren axialen Enden kleiner (größer) ist als der Durchmesser des als Stange (Zylinder) ausgebildeten, geführten Teils.

15. Führungsringanordnung nach Anspruch 14, dadurch gekennzeichnet, daß der größte (kleinste) Durchmesser der Führungsfläche (10) in dem Bereich, in welchem die Rückfläche den Vorsprung aufweist bzw. dem Vorsprung gegenübersteht, nicht wesentlich größer (kleiner) ist als der Durchmesser des als Stange (Zylinder) ausgebildeten, geführten Teils plus Fertigungstoleranzen und Wärmeausdehnungsbetrag.

16. Führungsringanordnung nach einem der Ansprüche 1 bis 15, dadurch gekennzeichnet, daß der Führungsring über den Umfang verteilte Verformungsstellen verringerter Verformungsfestigkeit aufweist.

17. Führungsringanordnung nach Anspruch 16, dadurch gekennzeichnet, daß die Verformungsstellen verringerte Querschnittsfläche im Meridionalschnitt zwischen einstückig ausgebildeten Ringabschnitten aufweisen.

18. Führungsringanordnung nach Anspruch 17, dadurch gekennzeichnet, daß die Verformungsstellen als Sollbruchstellen ausgebildet sind.

19. Führungsringanordnung nach Anspruch 16, dadurch gekennzeichnet, daß die Verformungsstellen als Kupplung zwischen nicht einstückig ausgebildeten Ringabschnitten ausgebildet sind.

20. Führungsringanordnung nach einem der Ansprüche 1 bis 19, dadurch gekennzeichnet, daß der Führungsring (3) ein Abschnitt eines quasi endlosen Bandes ist.

21. Führungsringanordnung nach einem der Ansprüche 1 bis 20, dadurch gekennzeichnet, daß der Führungsring (3) aus einem Werkstoff mit guten Gleit- oder Lagerqualitäten auf der Seite der Führungsfläche besteht und Mittel zur Erhöhung der Zug- und/oder Scherfestigkeit in Umfang- und/oder Axialrichtung umfaßt.

22. Führungsringanordnung nach einem der Ansprüche 1 bis 21, dadurch gekennzeichnet, daß der Führungsring aus einem Werkstoff mit guten Gleit- und/oder Lagerqualitäten auf der Seite der Führungsfläche besteht und Mittel zur Erhöhung der Biegefestigkeit gegenüber Biegemomenten um die Umfangslinie umfaßt.

23. Führungsringanordnung nach einem der Ansprüche 1 bis 22, dadurch gekennzeichnet, daß der relative konvexe Vorsprung der Rück- und Stützfläche (5,9) durch eine leicht verformbare, insbesondere elastische Zwischenschicht ersetzt ist.

24. Führungsringanordnung nach einem der Ansprüche 1 bis 23, dadurch gekennzeichnet, daß der maximal vorspringende Bereich der Rückfläche bzw. der Stützfläche außermittig näher dem inneren Ende (13) des Führungsrings (3) angeordnet ist.

## Claims

1. A guide-ring arrangement on a cylindrical guide part (2, 11) for the relative guiding of an elongate guided part (1, 2), having a guide ring (3) which has an essentially cylindrical guide surface (10) for sliding interaction with the cylindrical surface of the guided part (1, 2) and a rear surface (9), and having a holding device (5, 6) for the guide ring (3) on the guide part (2, 11), which holding device surrounds a supporting surface (5) interacting with the rear surface (9) of the guide ring (3), characterized in that the supporting surface (5) and the rear surface (9) project in a convex manner in relation to one another and, at the side of the projecting region, enclose a gap with a width which increases towards the outside, in that the holding device (5, 6) holds the guide ring (3) in a plane (8) running perpendicular to the axis of the guide part even when an angle (α) of deviation from the axis occurs between the guide part and the guided part, and in that the guide ring (3) is twisted in the presence of such an angle (α) of deviation from the axis.

2. A guide-ring arrangement according to claim 1, characterized in that the supporting surface (5) is cylindrical and the rear surface (9) is convex.

3. A guide-ring arrangement according to claim 1, characterized in that the rear surface (9) is cylindrical and the supporting surface (5) is convex.

4. A guide-ring arrangement according to claim 1, characterized in that the rear surface and the supporting surface are convex.

5. A guide-ring arrangement according to any one of claims 1 to 4, characterized in that the convex projection is designed as a curvature which is curved monotonically in the longitudinal section.

6. A guide-ring arrangement according to claim 5, characterized in that the curvature is a circular arc.

7. A guide-ring arrangement according to claim 6, characterized in that the radius of the curvature is greater than half the diameter of the guide ring.

8. A guide-ring arrangement according to any one of claims 1 to 6, characterized in that the radius of the curvature corresponds approximately to the formula: R=L/(2 sineα), wherein:
R: Radius of the curvature
L: Axial length of the guide ring
α: Angle of deviation from the axis.

9. A guide-ring arrangement according to any one of claims 1 to 8, characterized in that the radius of the curvature is at least approximately equal to twice the radius of the guide ring.

10. A guide-ring arrangement according to claim 5, characterized in that the radius of the curvature increases from the region of maximum projection towards the ends.

11. A guide-ring arrangement according to any one of claims 1 to 10, characterized in that the guide surface (10) is cylindrical.

12. A guide-ring arrangement according to any one of claims 1 to 10, characterized in that the guide surface (10) is hollowed in a concave manner.

13. A guide-ring arrangement according to claim 12, characterized in that the dimensions of the hollow and the deformation resistance of the guide ring (3) are calculated such that the base of the hollow rests against the surface of the guided part at the latest at the maximum expected guide force.

14. A guide-ring arrangement according to claim 13, characterized in that the smallest (largest) diameter of the guide surface (10) is smaller (larger) at its axial ends than the diameter of the guided part designed as a rod (cylinder).

15. A guide-ring arrangement according to claim 14, characterized in that the largest (smallest) diameter of the guide surface (10) is not substantially larger (smaller) in the region in which the rear surface has the projection or is opposite the projection than the diameter of the guided part designed as a rod (cylinder) plus production tolerances and an amount of thermal expansion.

16. A guide-ring arrangement according to any one of claims 1 to 15, characterized in that the guide ring has deformation points of reduced deformation resistance distributed over the circumference.

17. A guide-ring arrangement according to claim 16, characterized in that the deformation points have a reduced cross-sectional area in the meridional section between integrally designed ring sections.

18. A guide-ring arrangement according to claim 17, characterized in that the deformation points are designed as intended rupture points.

19. A guide-ring arrangement according to claim 16, characterized in that the deformation points are designed as a coupling between ring sections of non-integral design.

20. A guide-ring arrangement according to any one of claims 1 to 19, characterized in that the guide ring (3) is a section of a quasi endless band.

21. A guide-ring arrangement according to any one of claims 1 to 20, characterized in that the guide ring (3) consists of a material with good sliding or bearing qualities on the side of the guide surface and comprises means for increasing the tensile and/or shearing strength in the circumferential and/or axial direction.

22. A guide-ring arrangement according to any one of claims 1 to 21, characterized in that the guide ring consists of a material with good sliding and/or bearing qualities on the side of the guide surface and comprises means for increasing the bending resistance relative to torques about the circumferential line.

23. A guide-ring arrangement according to any one of claims 1 to 22, characterized in that the relative convex projection of the rear and supporting surface (5, 9) is replaced by an easily deformable, in particular elastic, intermediate layer.

24. A guide-ring arrangement according to any one of claims 1 to 23, characterized in that the region of maximum projection of the rear surface or the supporting surface is arranged off-centre nearer to the inner end (13) of the guide ring (3).

## Revendications

1. Dispositif d'anneau de guidage au niveau d'une partie de guidage (2, 11) cylindrique pour le guidage relatif d'une partie guidée (1, 2) allongée, avec un anneau de guidage (3) qui présente une surface de guidage (10), pour l'essentiel cylindrique, pour une action combinée coulissante avec la surface cylindrique de la partie guidée (1, 2), ainsi qu'une surface arrière (9), et avec un dispositif de maintien (5, 6) pour l'anneau de guidage (3) au niveau de la partie de guidage (2, 11), ledit dispositif de maintien comprenant une surface d'appui (5) agissant de façon combinée avec la surface arrière (9) de l'anneau de guidage (3), caractérisé en ce que la surface d'appui (5) et la surface arrière (9) font saillie l'une par rapport à l'autre de façon convexe, et comprennent latéralement par rapport à la partie en saillie une fente dont la largeur augmente vers l'extérieur, en ce que dispositif de maintien (5,6) maintient l'anneau de guidage (3) dans un plan (8) s'étendant perpendiculairement à l'axe de la partie de guidage même lorsqu'un angle de déviation (α) par rapport à l'axe apparaît entre la partie de guidage et la partie guidée, et en ce que l'anneau de guidage (3) est tordu lors de l'existence d'un tel angle de déviation (α) par rapport à l'axe.

2. Dispositif d'anneau de guidage selon la revendication 1, caractérisé en ce que la surface d'appui (5) est cylindrique et la surface arrière (9) convexe.

3. Dispositif d'anneau de guidage selon la revendication 1, caractérisé en ce que la surface arrière (9) est cylindrique et la surface d'appui (5) convexe.

4. Dispositif d'anneau de guidage selon la revendication 1, caractérisé en ce que la surface arrière et la surface d'appui sont convexes.

5. Dispositif d'anneau de guidage selon l'une des revendications 1 à 4, caractérisé en ce que la saillie convexe est formée en tant que bombure courbée de façon monotone en coupe longitudinale.

6. Dispositif d'anneau de guidage selon la revendication 5, caractérisé en ce que la courbure de la bombure est un arc de cercle.

7. Dispositif d'anneau de guidage selon la revendication 6, caractérisé en ce que le rayon de la courbure de la bombure est plus grand que le demi-diamètre de l'anneau de guidage.

8. Dispositif d'anneau de guidage selon l'une des revendications 1 à 6, caractérisé en ce que le rayon de la courbure de la bombure correspond à peu près à la formule : R=L/(2 sinα), où :
R : rayon de la courbure de la bombure
L : longueur axiale de l'anneau de guidage
α : angle de déviation par rapport à l'axe.

9. Dispositif d'anneau de guidage selon l'une des revendications 1 à 8, caractérisé en ce que le rayon de la courbure de la bombure est au moins égal au double du rayon de l'anneau de guidage.

10. Dispositif d'anneau de guidage selon la revendication 5, caractérisé en ce que le rayon de la courbure de la bombure augmente depuis le domaine faisant au maximum saillie en allant jusqu'aux extrémités.

11. Dispositif d'anneau de guidage selon l'une des revendications 1 à 10, caractérisé en ce que la surface de guidage (10) est cylindrique.

12. Dispositif d'anneau de guidage selon l'une des revendications 1 à 10, caractérisé en ce que la surface de guidage (10) est formée en auge de façon concave.

13. Dispositif d'anneau de guidage selon la revendication 12, caractérisé en ce que les dimensions de l'auge et la résistance de déformation de l'anneau de guidage (3) sont calculées de telle façon que le fond de l'auge est en contact avec la surface de la partie guidée au plus tard pour la force de guidage maximale prévisible.

14. Dispositif d'anneau de guidage selon la revendication 13, caractérisé en ce que le plus petit (le plus grand) diamètre de la surface de guidage (10) est, au niveau des extrémités axiales de ladite surface, plus petit (plus grand) que le diamètre de la partie guidée formée en tant que barre (cylindre).

15. Dispositif d'anneau de guidage selon la revendication 14, caractérisé en ce que dans le domaine dans lequel la surface arrière présente la saillie, respectivement est en face de la saillie, le plus grand (le plus petit) diamètre de la surface de guidage (10) n'est pas beaucoup plus grand (plus petit) que le diamètre de la partie guidée formée en tant que barre (cylindre), plus les tolérances de fabrication et la valeur de la dilatation thermique.

16. Dispositif d'anneau de guidage selon l'une des revendications 1 à 15, caractérisé en ce que l'anneau de guidage présente des points de déformation de moindre résistance à la déformation, répartis sur la circonférence.

17. Dispositif d'anneau de guidage selon la revendication 16, caractérisé en ce que les points de déformation présentent en coupe méridienne une superficie de section réduite, entre des parties d'anneau formées d'un seul tenant.

18. Dispositif d'anneau de guidage selon la revendication 17, caractérisé en ce que les points de déformation sont formés en tant que points destinés à la rupture.

19. Dispositif d'anneau de guidage selon la revendication 16, caractérisé en ce que les points de déformation sont formés en tant que dispositif d'accouplement entre des parties d'anneau n'étant pas formées d'un seul tenant.

20. Dispositif d'anneau de guidage selon l'une des revendications 1 à 19, caractérisé en ce que l'anneau de guidage (3) est une partie d'un ruban quasi sans fin.

21. Dispositif d'anneau de guidage selon l'une des revendications 1 à 20, caractérisé en ce que l'anneau de guidage (3) est composé sur le côté de la surface de guidage d'un matériau avec de bonnes qualités de glisse ou de stabilité et comprend des moyens pour l'augmentation de la résistance à la traction et/ou de la résistance au cisaillement dans la direction de la circonférence et / ou dans la direction de l'axe.

22. Dispositif d'anneau de guidage selon l'une des revendications 1 à 21, caractérisé en ce que l'anneau de guidage est composé sur le côté de la surface de guidage d'un matériau avec de bonnes qualités de glisse et / ou de stabilité et comprend des moyens pour l'augmentation de la résistance à la flexion par rapport à des moments de flexion autour de la ligne de circonférence.

23. Dispositif d'anneau de guidage selon l'une des revendications 1 à 22, caractérisé en ce que la saillie convexe relative de la surface arrière et de la surface d'appui (5, 9) est remplacée par une couche intermédiaire facilement déformable, en particulier élastique.

24. Dispositif d'anneau de guidage selon l'une des revendications 1 à 23, caractérisé en ce que le domaine de la surface arrière respectivement de la surface d'appui faisant saillie au maximum est disposé de façon excentrée plus près de l'extrémité (13) intérieure de l'anneau de guidage (3).
